# EUROPEAN PATENT APPLICATION

(11) **EP 1 473 250 A1**
(43) Date of publication of application: **03.11.2004**
(21) Application number: 04009961.6
(22) Date of filing: 27.04.2004
(51) Int. Cl.: B65D 90/58, F16K 1/16

(54) **Gate for emptying a self-flowing material out of a bin-shaped container, preferably grain out of an on-floor dryer, and method therefor**

(30) Priority: 29.04.2003 NO 20031933
(71) Applicant: Sissener, Einar A., 3215 Sandefjord (NO)
(72) Inventor: Sissener, Einar A., 3215 Sandefjord (NO)
(74) Representative: Onn, Thorsten

(57) **Abstract**

The present invention relates to a gate (1) for emptying a self-flowing material out of a bin-shaped container, preferably grain (15) out of an on-floor dryer, which gate (1) comprises a first surface (2) facing into the container and a second surface (3) facing out of the container when the gate (1) is in a closed position. The first surface (2) has a shape substantially like that of the curved surface of a half cylinder, and the second surface (3) has a shape substantially like that of the opposite straight surface of the half cylinder, and the gate (1) is pivotally supported about an axis (4) which substantially coincides with a longitudinal central axis of an imaginary cylinder of which the first surface (2) forms a part.

## Description

The present invention relates to a gate as disclosed in the preamble of independent claim 1, and to a method as disclosed in the preamble of independent claim 11.

In brief, an on-floor grain dryer is a facility for drying and storing grain built on a fixed floor surrounded by walls, and where there are air ducts in the floor for the supply of air via a fan with the necessary capacity for drying and/or aerating the grain. To obtain an even distribution of air during the drying or aerating process, it is essential that the grain is spread at a uniform height across the whole of the floor area of the on-floor dryer. To make maximum use of the volume of the dryer or building, it is commonplace to have large storage heights. A large storage height, in the range of 4 - 5 metres, will cause substantial grain pressure against the walls of the on-floor dryer. The problem then is to remove the grain from the on-floor dryer in a quick, efficient, simple, controlled and inexpensive manner.

A known solution is the use of a suction hose attached to special equipment for this purpose, and where the grain is drawn out of the on-floor dryer from the top. This is a complex and costly solution which requires separate special equipment. In addition, this emptying method requires a large amount of power (kW) and has a small capacity (tonne/hour).

Another, primitive and cumbersome, solution is that the gate for emptying the on-floor dryer is made of removable, thick planks stacked on top of each other, and where the emptying of the on-floor dryer is initiated by successively removing the planks. This solution thus results in a somewhat uncontrolled emptying, and heavy handling and many loose parts.

The aforementioned problems are solved by the gate according to the present invention as disclosed in the characterising clause of independent claims 1 and 11. Advantageous embodiments are set forth in the dependent claims.

The gate according to the present invention will be described in more detail in the following, with reference to the attached drawings wherein:

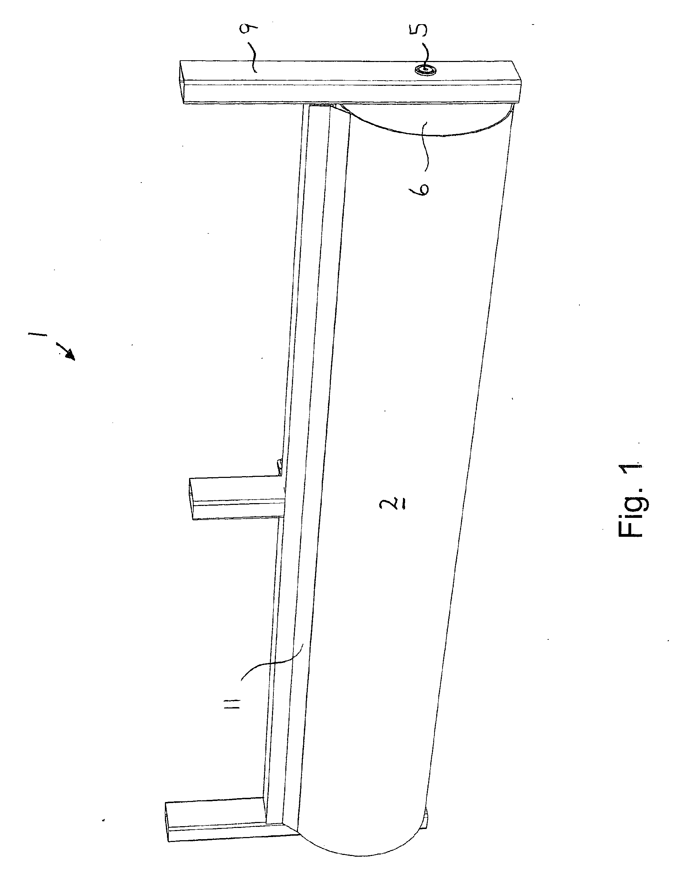

Figure 1 is a front perspective view of a preferred embodiment of the gate according to the present invention;

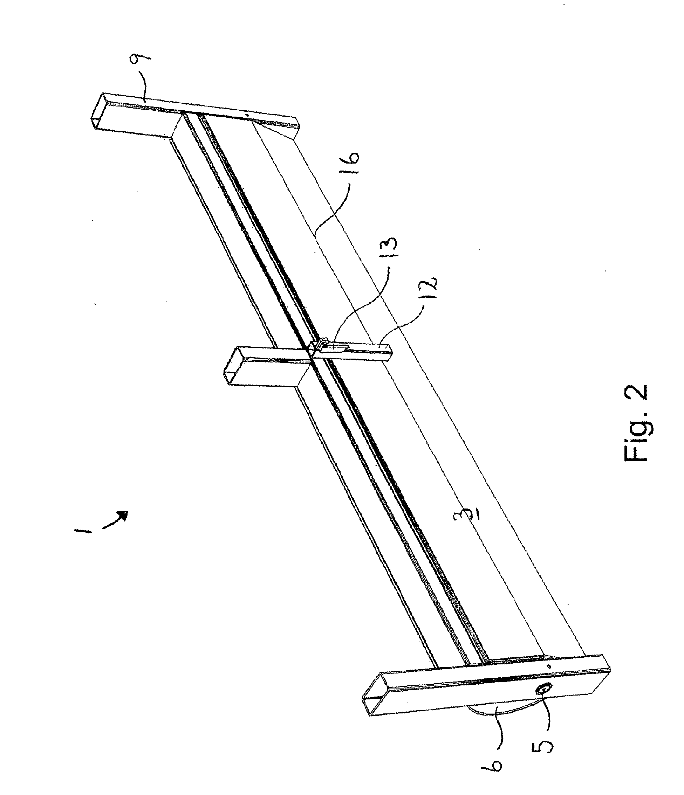

Figure 2 is a rear perspective view of the gate shown in Figure 1;
Figure 3 is a perspective split view of the gate shown in Figure 1; and
Figures 4a and 4b are side views of the gate shown in Figure 1, in a closed and an open position respectively, and in which figures parts of the grain material and the floor of the on-floor dryer are also indicated.

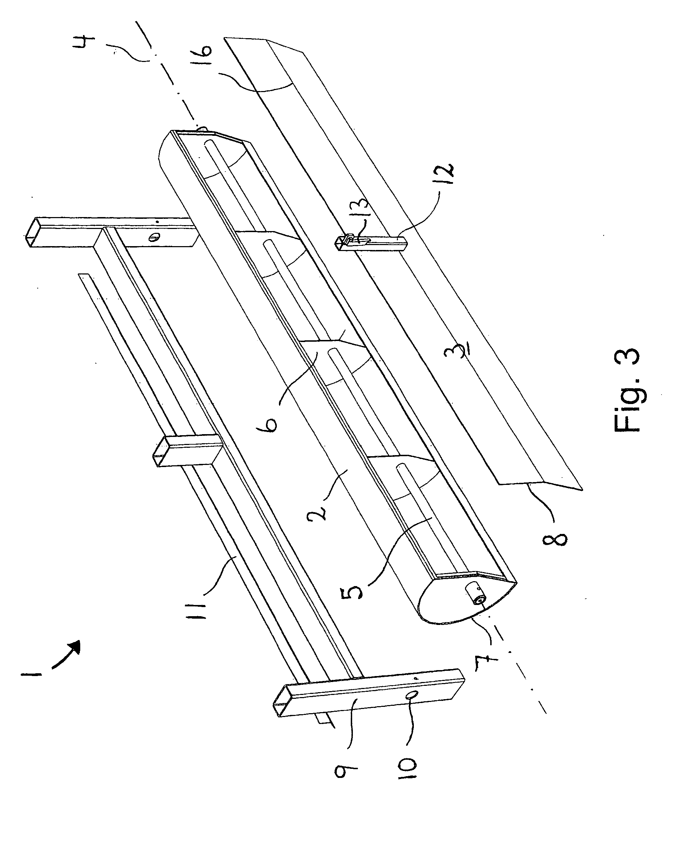

As can be seen from the figures, and in particular Figure 3, the gate according to the invention, generally indicated by reference numeral 1, comprises a first surface 2 facing into an on-floor dryer and a second surface 3 facing out from a on-floor dryer when the gate 1 is in a closed position, wherein the first surface 2 has a shape substantially like the curved surface of a half cylinder, and the second surface 3 has a shape substantially like the opposite straight surface of the half cylinder, and where the gate 1 is pivotally supported about an axis 4, indicated by the dotted line in Figure 3, which substantially coincides with a longitudinal central axis of an imaginary cylinder of which the first surface 2 forms a part.

In the illustrated, preferred embodiment of the invention, the gate 1 is supported by a throughgoing shaft 5 through the gate 1. Secured at right angles to the shaft 5 is a plurality of strengthening plates 6 distributed evenly along the length of the gate 1, and to which strengthening plates 6 there is secured a first plate 7 whose outer surface forms the first surface 2, and a second plate 8 whose outer surface 3 forms the second surface. The strengthening plates 6 have a shape substantially like the cross-sectional shape of the substantially half cylinder, and their purpose is to brace the gate 1 against the pressure from the grain material 15.

To increase the access opening during emptying and to improve the thrust against the floor 14 or against retaining steel on closing, the second plate 8 is provided with a small bend or angle along a longitudinal centre line 16 thereof, and the opposite side of each strengthening plate 6 is shaped having a corresponding bend or angle.

The gate 1 is further arranged in a frame 9, preferably of rectangular tubing, where through holes 10 are provided in the sides of the frame 9 for supporting the shaft 5 with a non-illustrated lubricated bearing. Advantageously, a baffle plate 11, attached to the top part of the frame 9 and facing into the platform dryer, is provided for sealing abutment with the first surface 2.

Secured to the other surface 3 is an opening and closing device 12, preferably in the form of a rectangular tube, for levering cooperation with a crowbar or the like. A spacer 13 is hingedly attached to an outer end of the opening and closing device 12.

The gate 1 and the frame 9 are preferably made of steel, and the various components 5, 6, 7, 8, and 12 of the gate 1 are preferably welded together. The plate 8 may optionally also be fastened with screws and/or blind rivets.

The gate is advantageously arranged in a non-illustrated, side-hinged access door in one of the walls of the on-floor dryer, preferably adjacent to the floor 14 of the on-floor dryer. The spacer 13 ensures space between the gate 1 and the floor 14 when the access door is opened and closed in that the spacer is brought into contact with the floor 14 or the frame 9 when the gate is open and closed, thereby preventing the gate from coming into contact with the floor 14.

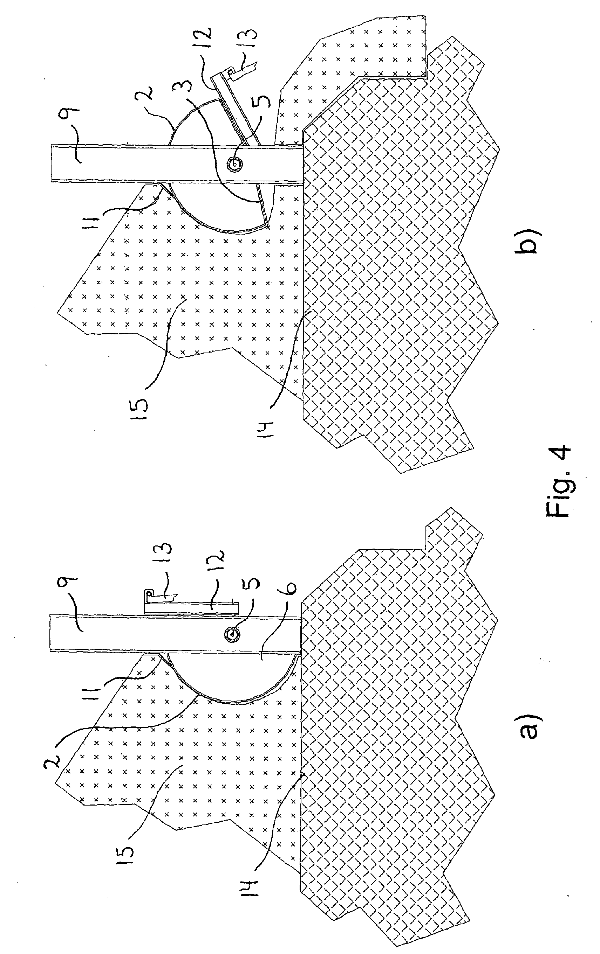

Figures 4a and 4b show the gate 1 according to the preferred embodiment of the invention in the open and closed position respectively, and where a part of the grain material 15 and the floor 14 are indicated by respective marked areas. The gate 1 is opened by inserting the non-illustrated crowbar or the like into the opening and closing device 12, i.e., the rectangular tube, and pulling the extreme end of the crowbar away from the gate 1. The gate 1 will then be turned about the axis 4 so that an opening at the bottom edge of the gate 1 is formed. The grain 15 then runs out in an amount and at a rate that corresponds to the size of the opening. The more the gate 1 is turned, the larger the opening, and the greater the amount of grain 15 that runs out. Closing the gate 1 is done by the reverse operation, either after the grain 15 has run out or by "cutting off' the flow of grain. The baffle plate 11 advantageously ensures that the grain does not penetrate between the frame 9 and the gate 1, and thus facilitates the turning of the latter. The grain 15 that runs out is removed continuously using suitable equipment, for example, a conveyor, feed screw, tractor with scoop or the like.

When some of the grain 15 has run out of the on-floor dryer and the grain front against the gate is stable (in other words, when there is no longer any pressure from the grain against the access door), the access door into the on-floor dryer can be opened in order to then remove the rest of the grain 15 using a tractor with scoop or a similar vehicle. These are vehicles and implements that are found on virtually every farm, and therefore costly new investments are not required.

The gate according to the preferred embodiment of the present invention has been tested by the Applicant over two seasons, and has been found to work extremely well. In the Applicant's on-floor dryer, the gate is 2.5 metres long and 0.5 metres high. Opening and closing the gate is done simply by manual force, by the two aforementioned operations. This is due to the design of the gate as described above, which gives a uniform distribution of the grain pressure and where none of the parts of the gate are pressed into the grain material when the gate is turned.

Although the emptying of grain out of an on-floor dryer is described in the exemplary embodiment, it is also conceivable that the gate according to the present invention could be used for emptying other self-flowing materials out of bin-shaped containers, where the material is stored in the same way as in a grain dryer, i.e., in full height against all the walls of the container. These other materials may include gravel, sand, sawdust, maize, rice, soya, oil plants and so forth. However, in the description and the claims the term "self-flowing material" should be understood to only comprise a material consisting of a large number of separate units which make possible an inclined stable material front, and therefore liquids are not included.

## Claims

1. A gate (1) for emptying a self-flowing material out of a bin-shaped container, preferably grain (15) out of an on-floor dryer, which gate (1) comprises a first surface (2) facing into the container and a second surface (3) facing out from the container when the gate (1) is in a closed position, **characterised in that** the first surface (2) has a shape substantially like that of the curved surface of a half cylinder and that the second surface (3) has a shape substantially like that of the opposite straight surface of the half cylinder, and that the gate (1) is pivotally supported about an axis (4) which substantially coincides with a longitudinal central axis of an imaginary cylinder of which the first surface (2) forms a part.

2. A gate according to claim 1, **characterised by** being supported by a throughgoing shaft (5) through the gate (1).

3. A gate according to claim 2, **characterised in that** at right angles to the shaft there is secured a plurality of strengthening plates (6) evenly distributed along the length of the gate (1), and to which strengthening plates (6) there is secured a first plate (7) whose outer surface constitutes the first surface (2) and a second plate (8) whose outer surface constitutes the second surface (3).

4. A gate according to claim 3, **characterised in that** the strengthening plates (6) have a shape substantially like that of the cross-sectional shape of the substantially half cylinder.

5. A gate according to any one of claims 2 to 4, **characterised in that** the second plate (8) is provided with a small bend or angle along a centre line (16) thereof, and that the opposite side of the strengthening plates (6) is made having a corresponding bend or angle.

6. A gate according to any one of claims 2 to 5, **characterised in that** it is arranged in a frame (9), preferably of rectangular tubing, where through holes (10) are provided in the sides of the frame (9) the lubricated support of the shaft (5).

7. A gate according to claim 6, **characterised in that** attached to the top part of the frame (9), and facing into the container, is a baffle plate (11) for sealing abutment with the first surface (2).

8. A gate according to any one of the preceding claims, **characterised in that** fastened to the second surface is an opening and closing device (12), preferably in the form of a rectangular tube, for levering cooperation with a crowbar or the like.

9. A gate according to claim 8, **characterised in that** a spacer (13) is hingedly attached to an outer end of the opening and closing device (1).

10. A gate according to any one of the preceding claims, **characterised in that** it is arranged in an access door in one of the walls of the container, preferably adjacent to the floor (14) of the container.

11. A method for emptying a self-flowing material out of a bin-shaped container, preferably grain (15) out of an on-floor dryer, using a gate according to any one of the preceding claims, **characterised by** the step of turning the gate (1) about the axis (4) until the gate (1) is in an open position.

12. A method according to claim 11, **characterised by** the further steps of opening the access door into the container after some of the material has run out and the material front facing the door is stable, and removing the remaining material using a tractor with scoop or similar vehicle.
